# EUROPÄISCHE PATENTSCHRIFT

(11) **EP 3 076 524 B1**
(45) Veröffentlichungstag und Bekanntmachung des Hinweises auf die Patenterteilung: **20.02.2019**
(21) Anmeldenummer: 15161674.5
(22) Anmeldetag: 30.03.2015
(51) Int. Cl.: H02K 5/06, H02K 15/14, H02K 5/15, B22D 19/00, B22D 17/00, B22D 17/24, H02K 5/02

(54) **MASCHINENKOMPONENTE EINER ELEKTRISCHEN MASCHINE UND VERFAHREN ZU DEREN HERSTELLUNG**
MACHINE COMPONENT OF AN ELECTRIC MACHINE AND METHOD FOR PRODUCTION THE SAME
COMPOSANT DE MACHINE ÉLECTRIQUE ET SON PROCÉDÉ DE FABRICATION

(43) Veröffentlichungstag der Anmeldung: 05.10.2016
(73) Patentinhaber: Siemens Aktiengesellschaft, 80333 München (DE)
(72) Erfinder: Bähr, Hubertus, 97631 Bad Königshofen (DE); Eckert, Rainer, 97616 Bad Neustadt / Herschfeld (DE); Holzheimer, Martin, 97618 Hollstadt (DE); Volkmuth, Benjamin, 97717 Sulzthal (DE)

(56) Entgegenhaltungen:
- EP-A1- 1 075 920
- DE-A1-102004 033 745
- US-A1- 2002 023 611

## Beschreibung

Die Erfindung betrifft eine Maschinenkomponente einer elektrischen Maschine mit einem metallischen Grundkörper und einem an dem Grundkörper angeordneten Dichtungselement. Ferner betrifft die Erfindung ein Verfahren zur Herstellung einer derartigen Maschinenkomponente. Ferner betrifft die Erfindung eine elektrische Maschine.

Aktivteile elektrischer Maschinen, beispielsweise Aktivteile von Servomotoren, werden im Betrieb oft sehr heiß. Andere Komponenten elektrischer Maschinen, insbesondere Messwertgeber, dürfen keinen Temperaturen ausgesetzt werden, die bestimmte Maximaltemperaturen überschreiten, da sie andernfalls beschädigt oder zerstört werden. Daher ist es oft erforderlich, die Aktivteile von anderen Komponenten elektrischer Maschinen thermisch zu entkoppeln. Insbesondere müssen häufig die meist metallischen Gehäuse von elektrischen Maschinen und Messwertgebern voneinander thermisch entkoppelt werden. Zur thermischen Entkopplung derartiger Gehäuse werden beispielsweise Isolierscheiben verwendet, die an vorgesehenen Positionen eines Gehäuses, beispielsweise an Lagerschilde elektrischer Maschinen, geklebt und/oder geschraubt werden.

DE 10 2004 033 745 A1 offenbart einen Elektromotor mit einem Gehäuse, das mit einem Lagerschild verbindbar ist. Das Lagerschild ist mit einem Klemmenkastenunterteil eines Klemmenkastens dicht und fest verbindbar, wobei im Verbindungsbereich eine Dichtung vorgesehen ist.

EP 1 075 920 A1 offenbart ein Verfahren zur Herstellung von Gummi-Metall-Bauteilen, wobei Kautschuk in ein ein Metallteil enthaltenes Formnest eingespritzt und in diesem Formnest ausgehärtet wird.

US 2002/0023611 A1 offenbart ein Verfahren zur Herstellung von Metallteilen mit integral ausgebildeter Dichtung, wobei um ausgehärtete Dichtungselemente aus Kunststoff in eine Gussform eingelegt werden und durch die Wärme des flüssigen Metalls aushärten.

Der Erfindung liegt die Aufgabe zugrunde, eine verbesserte Maschinenkomponente einer elektrischen Maschine mit einem metallischen Grundkörper und einem daran angeordneten Dichtungselement sowie ein Verfahren zur Herstellung einer derartigen Maschinenkomponente und eine verbesserte elektrische Maschine anzugeben.

Die Aufgabe wird erfindungsgemäß hinsichtlich der Maschinenkomponente durch die Merkmale des Anspruchs 1, hinsichtlich des Verfahrens durch die Merkmale des Anspruchs 5 und hinsichtlich der elektrischen Maschine durch die Merkmale des Anspruchs 7 gelöst.

Vorteilhafte Ausgestaltungen der Erfindung sind Gegenstand der Unteransprüche.

Eine erfindungsgemäße Maschinenkomponente einer elektrischen Maschine umfasst einen metallischen Grundkörper und ein an dem Grundkörper angeordnetes Dichtungselement zur thermischen Entkopplung der Maschinenkomponente und eines daran anliegenden Bauteils. Der Grundkörper ist durch Druckgießen gefertigt. Das Dichtungselement ist aus einem Duroplast gefertigt und wird bei dem Druckgießen des Grundkörpers formschlüssig mit dem Grundkörper verbunden.

Eine derartige Maschinenkomponente weist also einen metallischen Grundkörper auf, der durch Druckgießen gefertigt wird, wobei bei dem Druckgießen des Grundkörpers gleichzeitig ein Dichtungselement aus einem Duroplast zur thermischen Entkopplung der Maschinenkomponente und eines daran anliegenden Bauteils formschlüssig mit dem Grundkörper verbunden wird. Eine derartige Maschinenkomponente ist besonders einfach und kostengünstig herstellbar, da die Herstellung des Grundkörpers und dessen Verbindung mit dem Dichtungselement gleichzeitig durch Druckgießen erfolgen. Insbesondere entfällt vorteilhaft ein separates Verbinden des Dichtungselements mit dem Grundkörper durch Verkleben und/oder Verschrauben. Duroplaste eignen sich aufgrund ihrer hohen Temperaturstabilität besonders vorteilhaft zur Fertigung von Dichtungselementen, die beim Druckgießen mit metallischer Schmelze einer hohen Temperatur in Berührung kommen.

Die Erfindung sieht vor, dass das Dichtungselement an dem Grundkörper anliegende Dichtungsflächen mit jeweils wenigstens einer labyrinthartig verlaufenden Vertiefung aufweist. Dabei schließt sich wenigstens eine Dichtungsfläche an eine Teiloberfläche des

Dichtungselements an, die einen Teil der Außenoberfläche der Maschinenkomponente bildet.

Dichtungsflächen mit labyrinthartig verlaufenden Vertiefungen verbessern einerseits vorteilhaft die formschlüssige Verbin dung des Dichtungselements mit dem Grundkörper und können andererseits vorteilhaft turbulente Strömungen in der Nähe der Dichtungsflächen reduzieren, die zum Verzundern und Ausgasen der Dichtungsflächen führen und dadurch die Dichtheit der Verbindung des Dichtungselements mit dem Grundkörper gefährden. Dichtungsflächen, die sich an eine Teiloberfläche des Dichtungselements, die einen Teil der Außenoberfläche der Maschinenkomponente bildet, anschließen, sind besonders vorteilhaft, da sie sich beim Druckgießen in der Nähe von Oberflächenbereichen der beim Druckgießen verwendeten metallischen Schmelze und somit in Bereichen befinden, in denen die Schmelze besonders schnell abkühlt, so dass ein Verzundern und Ausgasen der Dichtungsflächen durch längeren Kontakt mit sehr heißer Schmelze vorteilhaft reduziert wird.

Eine Ausgestaltung der Erfindung sieht vor, dass der Grundkörper aus Aluminium oder einer Aluminiumlegierung gefertigt ist.

Diese Ausgestaltung der Erfindung berücksichtigt vorteilhaft, dass Aluminium und Aluminiumlegierungen besonders häufig als Material zur Fertigung von Maschinenkomponenten elektrischer Maschinen durch Druckgießen verwendet werden.

Eine weitere Ausgestaltung der Erfindung sieht vor, dass die Maschinenkomponente als ein Lagerschild der elektrischen Maschine ausgebildet ist.

Diese Ausgestaltung der Erfindung berücksichtigt vorteilhaft, dass Lagerschilde besonders dazu geeignet sind, an ihnen andere Bauteile wie Messwertgeber anzuordnen.

Eine weitere Ausgestaltung der Erfindung sieht vor, dass das Dichtungselement im Wesentlichen scheibenförmig ausgebildet ist.

Diese Ausgestaltung der Erfindung ermöglicht vorteilhaft eine großflächige thermische Entkopplung der Maschinenkomponente und eines daran anliegenden Bauteils.

Bei dem erfindungsgemäßen Verfahren zur Herstellung einer erfindungsgemäßen Maschinenkomponente wird das Dichtungselement in eine Druckgussform eingelegt, so dass eine Teiloberfläche des Dichtungselements an der Druckgussform anliegt. Anschließend wird die Druckgussform zum Druckgießen des Grundkörpers mit einer metallischen Schmelze befüllt.

Das Verfahren ermöglicht vorteilhaft die oben bereits genannte gleichzeitige Herstellung des Grundkörpers und dessen Verbindung mit dem Dichtungselement durch Druckgießen.

Den obigen Ausführungen entsprechend wird das Dichtungselement derart gefertigt, dass seine Oberfläche Dichtungsflächen aufweist, die jeweils wenigstens eine labyrinthartig verlaufende Vertiefung aufweisen und bei dem Druckgießen des Grundkörpers mit der metallischen Schmelze umgossen werden. Dabei schließt sich wenigstens eine Dichtungsfläche an die während des Druckgießens an der Druckgussform anliegende Teiloberfläche des Dichtungselements an.

Ferner wird das Dichtungselement vorzugsweise derart ausgebildet und in der Druckgussform positioniert, dass die metallische Schmelze, mit der die Druckgussform zum Druckgießen des Grundkörpers befüllt wird, in den Bereichen der Dichtungsflächen des Dichtungselements schneller abkühlt als in anderen Bereichen innerhalb der Druckgussform, und/oder dass turbulente Strömungen der metallische Schmelze, mit der die Druckgussform zum Druckgießen des Grundkörpers befüllt wird, in den Bereichen der Dichtungsflächen des Dichtungselements reduziert werden.

Wie oben bereits ausgeführt wurde, reduzieren diese Ausgestaltungen der Erfindung ein Verzundern und Ausgasen der Dichtungsflächen durch Anordnung der Dichtungsflächen in Bereichen, in denen die metallische Schmelze beim Druckgießen schnell abkühlt und turbulente Strömungen unterdrückt werden. Dadurch wird vorteilhaft die Dichtheit der Verbindung des Dichtungselements mit dem Grundkörper erhöht.

Die metallische Schmelze, mit der die Druckgussform zum Druckgießen des Grundkörpers befüllt wird, ist vorzugsweise eine Aluminiumlegierung mit einer Temperatur von etwa 700 Grad Celsius.

Diese Ausgestaltung des Verfahrens berücksichtigt wiederum vorteilhaft, dass Aluminiumlegierungen besonders häufig als Material zur Fertigung von Maschinenkomponenten elektrischer Maschinen durch Druckgießen verwendet werden.

Eine erfindungsgemäße elektrische Maschine weist eine erfindungsgemäße Maschinenkomponente und ein an dem Dichtungselement der Maschinenkomponente anliegendes Bauteil auf. Insbesondere ist die Maschinenkomponente ein Lagerschild und das an dem Dichtungselement der Maschinenkomponente anliegende Bauteil ist ein Gebergehäuse eines Messwertgebers.

Durch das Anliegen des Bauteils an dem Dichtungselement der Maschinenkomponente wird das Bauteil durch das Dichtungselement von dem Grundkörper der Maschinenkomponente thermisch entkoppelt. Insbesondere im Falle, dass die Maschinenkomponente ein Lagerschild ist und das an ihrem Dichtungselement anliegende Bauteil ein Gebergehäuse eines Messwertgebers ist, wird dadurch vorteilhaft die Gefahr eines Überhitzens des Messwertgebers durch den Kontakt mit dem Grundkörper der Maschinenkomponente reduziert. Insbesondere ist dies vorteilhaft, wenn die elektrische Maschine als ein Servomotor ausgebildet ist, da die Aktivteile von Servomotoren im Betrieb oft sehr heiß werden.

Gleichzeitig wird die Maschinenkomponente durch das Dichtungselement vorteilhaft gegen ein Eindringen von Flüssigkeiten abgedichtet. Derartige Flüssigkeiten sind beispielsweise Strahlwasser oder Schmiermittel, denen z. B. eine in oder an einer zerspanenden Maschine, z. B. einer Fräsmaschine, angeordnete elektrische Maschine ausgesetzt ist. Durch ein erfindungsgemäßes Dichtungselement können Schutzarten bis zu den so genannten IP-Codes (IP = International Protection) IPX5 (Schutz gegen Strahlwasser) und sogar IPX7 (Schutz gegen die Wirkungen beim zeitweiligen Untertauchen in Wasser), insbesondere IP67 (völlige Staubdichtheit und Schutz gegen die Wirkungen zeitweiligen Untertauchens in Wasser) erreicht werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen
- FIG 1: eine Maschinenkomponente einer elektrischen Maschine in einer Schnittdarstellung, und
- FIG 2: eine teilweise geschnitten dargestellte elektrische Maschine in einer Seitenansicht.

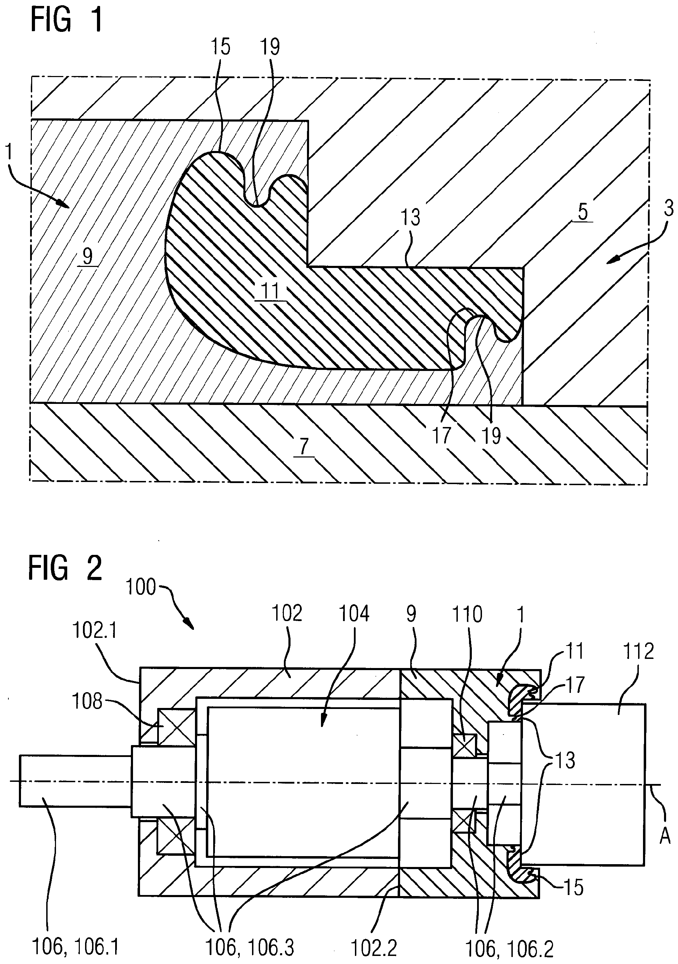

Figur 1 zeigt eine Maschinenkomponente 1 einer elektrischen Maschine 100 (siehe Figur 2) in einer Schnittdarstellung. Die Maschinenkomponente 1 befindet sich in einer Druckgussform 3, die zur Herstellung der Maschinenkomponente 1 verwendet wird und aus einem ersten Gussformteil 5 und einem zweiten Gussformteil 7 besteht. Dabei sind in der Figur 1 jeweils nur Ausschnitte der Maschinenkomponente 1 und der Gussformteile 5, 7 dargestellt.

Die Maschinenkomponente 1 umfasst einen metallischen Grundkörper 9 und ein an dem Grundkörper 9 angeordnetes, aus einem Kunststoff gefertigtes Dichtungselement 11 zur thermischen Entkopplung der Maschinenkomponente 1 und eines daran anliegenden Bauteils 112 (siehe Figur 2). Die Maschinenkomponente 1 ist beispielsweise ein Lagerschild der elektrischen Maschine 100 und das Dichtungselement 11 ist beispielsweise zur thermischen Entkopplung der Maschinenkomponente 1 und eines daran anliegenden Gebergehäuses eines Messwertgebers im Wesentlichen scheibenförmig ausgebildet.

Das Dichtungselement 11 ist aus einem Duroplast gefertigt und der Grundkörper 9 ist vorzugsweise aus Aluminium oder einer Aluminiumlegierung gefertigt.

Der Grundkörper 9 wird durch Druckgießen in der Druckgussform 3 hergestellt, wobei gleichzeitig das Dichtungselement 11 formschlüssig mit dem Grundkörper 9 verbunden wird. Dazu werden die beiden Gussformteile 5, 7 zu der Druckgussform 3 zusammengefügt und das Dichtungselement 11 wird in die Druckgussform 3 eingelegt, so dass eine Teiloberfläche 13 des Dichtungselements 11 an der Druckgussform 3 anliegt. Anschließend wird die Druckgussform 3 zum Druckgießen des Grundkörpers 9 mit einer metallischen Schmelze, beispielsweise mit einer Aluminiumlegierung mit einer Temperatur von etwa 700 Grad Celsius, befüllt, wobei der nicht an der Druckgussform 3 anliegende Bereich der Oberfläche des Dichtungselements 11 von der metallischen Schmelze umgossen wird.

Nach der Abkühlung und Aushärtung der metallischen Schmelze werden die beiden Gussformteile 5, 7 voneinander getrennt und die Maschinenkomponente 1 wird der Druckgussform 3 entnommen. Die während des Druckgießens an der Druckgussform 3 anliegende Teiloberfläche 13 des Dichtungselements 11 bildet einen Teil der Außenoberfläche der Maschinenkomponente 1. Der übrige Bereich der Oberfläche des Dichtungselements 11 liegt an dem Grundkörper 9 an.

Die Oberfläche des Dichtungselements 11 weist Dichtungsflächen 15, 17 auf, die sich jeweils an einen Endbereich der Teiloberfläche 13 des Dichtungselements 11 anschließen und bei dem Druckgießen des Grundkörpers 9 mit metallischer Schmelze umgossen werden. Jede Dichtungsfläche 15, 17 weist wenigstens eine labyrinthartig verlaufende Vertiefung 19 auf, die sich bei dem Druckgießen des Grundkörpers 9 mit metallischer Schmelze füllt. Das Dichtungselement 11 ist derartig ausgebildet und in der Druckgussform 3 positioniert, dass sich die Dichtungsflächen 15, 17 nahe an der Innenoberfläche der Druckgussform 3 befinden, so dass die metallische Schmelze in den Bereichen der Dichtungsflächen 15, 17 des Dichtungselements 11 schneller abkühlt als in anderen Bereichen innerhalb der Druckgussform 3, und dass turbulente Strömungen der metallische Schmelze in den Bereichen der Dichtungsflächen 15, 17 reduziert werden.

Insgesamt ist das Dichtungselement 11 derart gestaltet, dass nur ein geringes Verzundern und Ausgasen seiner Oberfläche bei dem Umgießen mit der metallischen Schmelze auftritt.

Erforderlichenfalls wird der Grundkörper 9 nach dem Druckgießen und Aushärten der metallischen Schmelze dahingehend nachbearbeitet, dass eine Kontaktfläche zu einem an der Maschinenkomponente 1 anzulegenden Bauteil 112 reduziert wird.

Figur 2 zeigt schematisch eine teilweise geschnitten dargestellte elektrische Maschine 100 in einer Seitenansicht. Die elektrische Maschine 100 ist beispielsweise als ein Servomotor ausgebildet.

Die elektrische Maschine 100 umfasst ein als ein so genanntes Topfgehäuse ausgebildetes Maschinengehäuse 102, einen Rotor 104 mit einer Rotorwelle 106, eine als ein Lagerschild ausgebildete Maschinenkomponente 1 mit einem metallischen Grundkörper 9 und einem Dichtungselement 11, Lager 108, 110 zur Lagerung der Rotorwelle 106, ein an dem Dichtungselement 11 anliegendes Bauteil 112, das als ein Gebergehäuse eines Messwertgebers ausgebildet ist, sowie einen (in Figur 2 nicht sichtbaren) Stator, der in dem Maschinengehäuse 102 um den Rotor 104 herum angeordnet ist. Das Maschinengehäuse 102, die Maschinenkomponente 1 und die Lager 108, 110 sind geschnitten darstellt.

Eine Längsachse A der Rotorwelle 106 definiert eine axiale Richtung. Die Rotorwelle 106 weist einen ersten Endabschnitt 106.1, einen zweiten Endabschnitt 106.2 und einen zwischen den beiden Endabschnitten 106.1, 106.2 liegenden Mittelabschnitt 106.3 auf. Der Mittelabschnitt 106.3 verläuft durch das Maschinengehäuse 102 hindurch. Der erste Endabschnitt 106.1 verläuft außerhalb des Maschinengehäuses 102 auf der Seite eines ersten axialen Endes 102.1 des Maschinengehäuses 102. Der zweite Endabschnitt 106.2 verläuft außerhalb des Maschinengehäuses 102 auf der Seite eines dem ersten axialen Ende 102.1 gegenüber liegenden zweiten axialen Endes 102.2 des Maschinengehäuses 102.

Die Maschinenkomponente 1 schließt sich axial an das zweite axiale Ende 102.2 des Maschinengehäuses 102 an, ist mit diesem verbunden und umgibt ein aus dem zweiten axialen Ende 102.2 des Maschinengehäuses 102 herausgeführtes Ende des Mittelabschnitts 106.3 der Rotorwelle 106 und den sich daran anschließenden zweiten Endabschnitt 106.2 der Rotorwelle 106.

Der Mittelabschnitt 106.3 der Rotorwelle 106 ist im Bereich des ersten axialen Endes 102.1 des Maschinengehäuses 102 in einem von dem Maschinengehäuse 102 getragenen ersten Lager 108 gelagert. Der zweite Endabschnitt 106.2 der Rotorwelle 106 ist einem zweiten Lager 110, das von dem Grundkörper 9 der Maschinenkomponente 1 getragen wird, gelagert. Die Lager 108, 110 sind beispielsweise jeweils als ein Kugellager ausgebildet.

Das Dichtungselement 11 ist ringförmig ausgebildet und verläuft um die axiale Richtung herum im Bereich eines von dem Maschinengehäuse 102 abgewandten axialen Endes der Maschinenkomponente 1, so dass eine Teilbereich seiner Teiloberfläche 13 einen zur axialen Richtung senkrecht stehenden Teil der Außenoberfläche der Maschinenkomponente 1 bildet. An diesem Teilbereich der Teiloberfläche 13 liegt das Bauteil 112 an, ohne anderweitig an der Maschinenkomponente 1 und insbesondere deren Grundkörper 9 anzuliegen. Durch das Dichtungselement 11 werden der Grundkörper 9 und das Bauteil 112 somit thermisch entkoppelt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können im Rahmen der unabhängigen Ansprüche vom Fachmann hieraus abgeleitet werden, ohne den Schutzumfangder Erfindung zu verlassen.

## Patentansprüche

1. Maschinenkomponente (1) einer elektrischen Maschine, die Maschinenkomponente (1) umfassend einen metallischen Grundkörper (9) und ein an dem Grundkörper (9) angeordnetes Dichtungselement (11) zur thermischen Entkopplung der Maschinenkomponente (1) und eines daran anliegenden Bauteils, wobei der Grundkörper (9) durch Druckgießen gefertigt ist,
**dadurch gekennzeichnet, dass**
- das Dichtungselement (11) durch Druckgießen des Grandkörpers (9) aus einem Duroplast gefertigt ist,
- das Dichtungselement (11) formschlüssig mit dem Grundkörper (9) verbunden ist,
- und das Dichtungselement (11) an dem Grundkörper (9) anliegende Dichtungsflächen (15, 17) mit jeweils wenigstens einer labyrinthartig verlaufenden Vertiefung (19) aufweist,
- wobei sich wenigstens eine Dichtungsfläche (15, 17) an eine Teiloberfläche (13) des Dichtungselements (11) anschließt, die einen Teil der Außenoberfläche der Maschinenkomponente (1) bildet.

2. Maschinenkomponente (1) nach Anspruch 1,
**dadurch gekennzeichnet, dass** der Grundkörper (9) aus Aluminium oder einer Aluminiumlegierung gefertigt ist.

3. Maschinenkomponente (1) nach einem der vorhergehenden Ansprüche,
**dadurch gekennzeichnet, dass** die Maschinenkomponente (1) als ein Lagerschild der elektrischen Maschine ausgebildet ist.

4. Maschinenkomponente (1) nach einem der vorhergehenden Ansprüche,
**dadurch gekennzeichnet, dass** das Dichtungselement (11) im Wesentlichen scheibenförmig ausgebildet ist.

5. Verfahren zur Herstellung einer Maschinenkomponente (1) gemäß einem der vorhergehenden Ansprüche, wobei
- das Dichtungselement (11) aus einem Duroplast derart gefertigt wird, dass seine Oberfläche Dichtungsflächen (15, 17) aufweist, die jeweils wenigstens eine labyrinthartig verlaufende Vertiefung (19) aufweisen,
- das Dichtungselement (11) in eine Druckgussform (3) eingelegt wird, so dass eine Teiloberfläche (13) des Dichtungselements (11), an die sich wenigstens eine Dichtungsfläche (15, 17) anschließt, an der Druckgussform (3) anliegt,
- und die Druckgussform (3) anschließend zum Druckgießen des Grundkörpers (9) mit einer metallischen Schmelze befüllt wird, wobei die Dichtungsflächen (15, 17) mit der metallischen Schmelze umgossen werden.

6. Verfahren nach Anspruch 5,
**dadurch gekennzeichnet, dass** die metallische Schmelze, mit der die Druckgussform (3) zum Druckgießen des Grundkörpers (9) befüllt wird, eine Aluminiumlegierung mit einer Temperatur von etwa 700 Grad Celsius ist.

7. Elektrische Maschine (100) mit einer Maschinenkomponente (1) gemäß einem der Ansprüche 1 bis 4 und einem an dem Dichtungselement (11) der Maschinenkomponente (1) anliegenden Bauteil (112).

8. Elektrische Maschine (100) nach Anspruch 7,
**dadurch gekennzeichnet, dass** die Maschinenkomponente (1) ein Lagerschild ist und das an dem Dichtungselement (11) der Maschinenkomponente (1) anliegende Bauteil (112) ein Gebergehäuse eines Messwertgebers ist.

## Claims

1. Machine component (1) of an electric machine, the machine component (1) comprising a metal base body (9) and a sealing element (11) arranged on the base body (9) for thermally decoupling the machine component (1) and a unit abutting it, wherein the base body (9) is manufactured by pressure die-casting,
**characterised in that**
- the sealing element (11) is manufactured from a thermosetting material by pressure die-casting of the base body (9),
- the sealing element (11) is connected in form-fit manner to the base body (9),
- and the sealing element (11) has sealing surfaces (15, 17) abutting the base body (9), each having at least one depression (19) running in a labyrinth-type manner,
- wherein at least one sealing surface (15, 17) is attached to a partial surface (13) of the sealing element (11) which forms a part of the outer surface of the machine component (1).

2. Machine component (1) according to claim 1,
**characterised in that** the base body (9) is manufactured from aluminium or an aluminium alloy.

3. Machine component (1) according to one of the preceding claims,
**characterised in that** the machine component (1) is designed as a bearing shield of the electric machine.

4. Machine component (1) according to one of the preceding claims,
**characterised in that** the sealing element (11) is designed to be essentially disk-shaped.

5. Method for manufacturing a machine component (1) according to one of the preceding claims, wherein
- the sealing element (11) is manufactured from a thermosetting material, such that its surface has sealing surfaces (15, 17) which each have at least one depression (19) running in a labyrinth-type manner,
- the sealing element (11) is placed into a die-casting mould (3), so that a partial surface (13) of the sealing element (11), which is attached to at least one sealing surface (15, 17), abuts the die-casting mould (3),
- and the die-casting mould (3) is then filled with a metal molten mass in order to die-cast the base body (9), wherein the sealing surfaces (15, 17) are encapsulated with the metal molten mass.

6. Method according to claim 5,
**characterised in that** the metal molten mass with which the die-casting mould (3) is filled to pressure die-cast the base body (9) is an aluminium alloy at a temperature of approximately 700 degrees Celsius.

7. Electric machine (100) with a machine component (1) according to one of claims 1 to 4 and a unit (112) abutting the sealing element (11) of the machine component (1).

8. Electric machine (100) according to claim 7,
**characterised in that** the machine component (1) is a bearing shield and the unit (112) abutting the sealing element (11) of the machine component (1) is a sensor housing of a sensor.

## Revendications

1. Composant (1) d'une machine électrique, le composant (1) de la machine comprenant un corps (9) de base métallique et un élément (11) d'étanchéité, disposé sur le corps (9) de base, pour le découplage thermique du composant de la machine et d'une pièce s'y appliquant, le corps (9) de base étant fabriqué par coulée sous pression,
**caractérisé en ce que**
- l'élément (11) d'étanchéité est fabriqué en une matière thermodurcissable par coulée sous pression du corps (9) de base,
- l'élément (11) d'étanchéité est relié à complémentarité de forme au corps (9) de base,
- et l'élément (11) d'étanchéité a des surfaces (15, 17) d'étanchéité s'appliquant au corps (9) de base, ayant chacune au moins une cavité (9) s'étendant en forme de labyrinthe,
- dans lequel au moins une surface (15, 17) d'étanchéité se raccorde à une surface (13) partielle de l'élément (11) d'étanchéité, qui forme une partie de la surface extérieure du composant (1) de la machine.

2. Composant (1) de machine suivant la revendication 1, **caractérisé en ce que** le corps (9) de base est en aluminium ou en un alliage d'aluminium.

3. Composant (1) de machine suivant l'une des revendications précédentes,
**caractérisé en ce que** le composant (1) de la machine est constitué sous la forme d'un flasque de la machine électrique.

4. Composant (1) de machine suivant l'une des revendications précédentes,
**caractérisé en ce que** l'élément (11) d'étanchéité est sensiblement en forme de disque.

5. Procédé de fabrication d'un composant (1) de machine suivant l'une des revendications précédentes, dans lequel
- on fabrique l'élément (11) d'étanchéité en une matière thermodurcissable, de manière à ce que sa surface ait des surfaces (15, 17) d'étanchéité, qui ont chacune au moins une cavité (19) s'étendant en forme de labyrinthe,
- on insère l'élément (11) d'étanchéité dans un moule (3) de coulée sous pression, de manière à ce qu'une surface (13) partielle de l'élément (11) d'étanchéité, à laquelle se raccorde au moins une surface (15, 17) d'étanchéité, s'applique au moule (3) de coulée sous pression,
- et ensuite on remplit d'un métal fondu le moule de coulée sous pression ensuite pour couler sous pression le corps (9) de base, les surfaces (15, 17) d'étanchéité étant entourées du métal fondu.

6. Procédé suivant la revendication 5,
**caractérisé en ce que** le métal fondu, dont le moule (3) de coulée sous pression est rempli pour la coulée sous pression du corps (9) de base, est un alliage d'aluminium ayant une température d'environ 700 degrés celsius.

7. Machine (100) électrique, comprenant un composant (1) de machine suivant l'une des revendications 1 à 4 et une pièce (112) s'appliquant à l'élément (11) d'étanchéité du composant (1) de la machine.

8. Machine (100) électrique suivant la revendication 7, **caractérisée en ce que** le composant (1) de la machine est un flasque et la pièce (112), s'appliquant à l'élément (11) d'étanchéité du composant (1) de la machine, est un boîtier d'un capteur d'une valeur de mesure.
